# EUROPEAN PATENT SPECIFICATION

(11) **EP 3 396 801 B1**
(45) Date of publication and mention of the grant of the patent: **21.10.2020**
(21) Application number: 18168849.0
(22) Date of filing: 23.04.2018
(51) Int. Cl.: H02G 3/03, H02G 5/10

(54) **HIGH VOLTAGE TERMINAL COOLING STRUCTURE**
HOCHSPANNUNGSKLEMMENKÜHLSTRUKTUR
STRUCTURE DE REFROIDISSEMENT DE TERMINAL HAUTE TENSION

(30) Priority: 24.04.2017 JP 2017085043
(43) Date of publication of application: 31.10.2018
(73) Proprietor: Fujikura Ltd., Tokyo 135-8512 (JP)
(72) Inventor: RANDEEP, Singh, Tokyo, 135-8512 (JP); PHAN, Thanhlong, Tokyo, 135-8512 (JP); TAKAHASHI, Makoto, Tokyo, 135-8512 (JP); HORIUCHI, Yasuhiro, Tokyo, 135-8512 (JP)
(74) Representative: Plasseraud IP

(56) References cited:
- US-A1- 2006 120 024
- US-A1- 2013 043 071
- US-A1- 2014 060 779
- US-A1- 2015 124 381

## Description

### BACKGROUND OF THE INVENTION

### Field of the Invention

The present invention relates to a high voltage terminal cooling structure.

### Description of Related Art

Japanese Unexamined Patent Application, First Publication No. 2013-187282 discloses a power supply connector that is used in an electrically driven vehicle, such as an electric automobile, a hybrid automobile, or the like. The power supply connector is used to electrically connect a power supply target such as a secondary battery with an external power source.

Example of background art can be found for example in US2015/124381A1 disclosing switchboard copper busbar heat dissipating device, US2006/120024A1 disclosing a High-voltage system and high-power circuit breaker with cooling, US2014/060779A1 disclosing a Passive Cooling System For Switchgear With Star-Shaped Condenser, and US2013/043071A1 disclosing a thermal energy management component and system incorporating the same.

### SUMMARY OF THE INVENTION

In a high voltage device (e.g. a fuse box), a large current may flow to the high voltage terminal in order to rapidly provide power supply target. If the large current flows to the high voltage terminal, heat is generated in the high voltage terminal and a temperature thereof increases. Japanese Unexamined Patent Application, First Publication No. 2013-187282 discloses a configuration for cooling the power supply connector using a ventilation mechanism. However, there is a high demand for a more efficient cooling structure for cooling the high voltage terminal.

The present invention is made in consideration of the above-described circumstances, and an object thereof is to provide a high voltage terminal cooling structure capable of efficiently cooling the terminal (the high voltage terminal in the present invention).

In order to achieve the above-described object, according to the present invention, there is provided a high voltage terminal cooling structure, according to claim 1.

According to the high voltage terminal cooling structure of the above-described aspect, heat can be efficiently transported from the high voltage terminal to the heat dissipation mechanism via the heat transfer mechanism and the first heat pipe. Accordingly, it is possible to efficiently cool the high voltage terminal.

In addition, the heat transfer mechanism may include an insulator that electrically insulates the high voltage terminal and the first heat pipe from each other.

In this case, the high voltage terminal and the first heat pipe are electrically insulated from each other, as outlined above. And, for example, it is possible to prevent leakage of a current flowing in the high voltage terminal via the first heat pipe.

In addition, the heat transfer mechanism is a vapor chamber, the vapor chamber includes a container having conductivity, and the insulator is positioned between the container and the first heat pipe and between the container and the high voltage terminal.

In this case, even when the container is formed of a metal or the like, it is possible to prevent leakage of the current flowing in the high voltage terminal via the container or the first heat pipe.

In addition, a working fluid of the first heat pipe may be a nonconductive liquid.

In addition, the heat transfer mechanism may be one of a vapor chamber or a second heat pipe which uses a nonconductive liquid as a working fluid.

In these cases, even if the working fluid leaks from the first heat pipe or the heat transfer mechanism, and the working fluid is in contact with the high voltage terminal, it is possible to prevent the leakage of current flowing in the high voltage terminal.

According to the aspect of the present invention, it is possible to provide the high voltage terminal cooling structure capable of efficiently cooling the high voltage terminal.

### BRIEF DESCRIPTION OF THE DRAWINGS

FIG. 1 is a schematic view of a high voltage terminal cooling structure according to a first embodiment.
FIG. 2 is a sectional view taken along line II-II of the high voltage terminal cooling structure of FIG. 1.
FIG. 3 is a sectional view taken along line III-III of the high voltage terminal cooling structure of FIG. 1.
FIG. 4 is a sectional view of a high voltage terminal cooling structure according to a modification example of the first embodiment.
FIG. 5 is a sectional view of a high voltage terminal cooling structure according to another modification example of the first embodiment.
FIG. 6 is a schematic view of a high voltage terminal cooling structure according to a second embodiment.

### DETAILED DESCRIPTION OF THE INVENTION

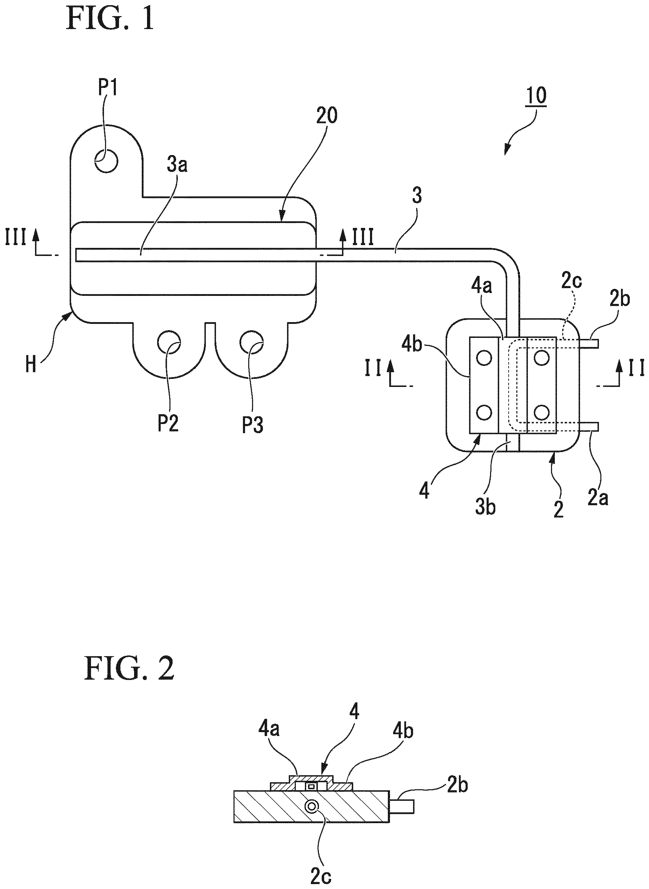

Hereinafter, a configuration of a high voltage terminal cooling structure according to the first embodiment (hereinafter, simply referred as "cooling structure 10") will be described with reference to FIGS. 1 to 3. The cooling structure 10 shown in FIG. 1 is a system for cooling a high voltage terminal H. For example, the high voltage terminal H is an interface for electrically connecting high voltage electronics mounted on a vehicle and an external power source to each other. There are large current flows in this type of interface, therefore heat is generated in the interface and a temperature thereof increases. In addition, the cooling structure 10 may be used not only for the high voltage terminal H but also for other high voltage devices in automotive.

As shown in FIG. 1, the cooling structure 10 includes a cold plate (a heat dissipation mechanism) 2, at least one heat pipe (first heat pipe) 3, a fixing member 4, and a vapor chamber (heat transfer mechanism) 20. The heat pipe 3 includes a first end portion 3a and a second end portion 3b. In this embodiment, the number of the heat pipe 3 is one. However, the number of the heat pipe 3 is not limited to the example shown in FIG. 1. The number of the heat pipe 3 may be two or more.

In the example of FIG. 1, the high voltage terminal H includes an inlet hole PI, a first outlet hole P2, and a second outlet hole P3. A pin of an electrical cable (not shown) or the like is inserted into the inlet hole P1. A connector pin (not shown) that is electrically connected to power electronics or the like is inserted into each of the outlet holes P2 and P3. The inlet hole P1 and the outlet holes P2 and P3 are electrically connected, and thus, a large current flows to the current carrying portions, and temperatures of the current carrying portions become high.

The cold plate 2 is positioned away from the high voltage terminal H. The cold plate 2 is formed in a rectangular plate shape. The cold plate 2 includes an inlet 2a for a coolant, an outlet 2b for the coolant, and a flow path 2c for the coolant. The cold plate 2 is mainly formed of a metal such as aluminum or copper. The flow path 2c is provided inside the cold plate 2. The inlet 2a and the outlet 2b are connected to each other through the flow path 2c. Moreover, in FIG. 1, the flow path 2c is formed in a linear shape. However, the flow path 2c can also be meandering in order to efficiently transfer heat from the cold plate 2 to the coolant.

The coolant flows from the inlet 2a into the cold plate 2 by a pump (not shown) or the like, passes through the flow path 2c, and flows out from the outlet 2b. While the coolant flows through the flow path 2c, the temperature of the coolant is increased by heat received from the heat pipe 3.

The second end portion 3b of the heat pipe 3 is in contact with an upper (possible also bottom) surface of the cold plate 2. The first end portion 3a of the heat pipe 3 is in contact with the vapor chamber 20. And the heat pipe 3, for example, is a heat pipe in which a wick and a working fluid are enclosed in a copper pipe. In order to prevent leakage of electricity or the like, it is preferable that the working fluid is a nonconductive liquid. In case conductive working fluid is to be used, then insulating material for vapor chamber and/or heat pipe will need to be considered. As the nonconductive liquid, hydrofluoroether (for example, NOVEC (registered trademark) 7100 or similar from available range/options manufactured by 3M Company) or the like can be used. In the heat pipe 3, the second end portion 3b which is in contact with the cold plate 2 functions as a condensing portion of the working fluid. In the heat pipe 3, the first end portion 3a which is in contact with the vapor chamber 20 functions as an evaporating portion for the working fluid.

In the evaporating portion of the heat pipe 3, the working fluid which receives heat from the high voltage terminal H via the vapor chamber 20 is evaporated. The evaporated working fluid flows toward the condensing portion of the heat pipe 3 and is cooled by the cold plate 2 in the condensing portion of the heat pipe 3. The condensed working fluid flows to the evaporating portion again by a capillary force generated by pores of the wick along the circumference/wall of the heat pipe 3. According to the above-described operation, the heat pipe 3 can continuously transport heat from the high voltage terminal H to the cold plate 2.

In the heat pipe 3, the portion that is in contact with the cold plate 2 is fixed to the cold plate 2 by the fixing member 4. As shown in FIGS. 1 and 2, the fixing member 4 includes a top plate 4a which is in contact with the heat pipe 3 and leg portions 4b which extend from the top plate 4a toward the cold plate 2. The fixing member 4 can be formed by bending a metal plate. Screws are inserted into through-holes provided in the leg portions 4b, the screws are bolted to the screw holes of the cold plate 2, and thus, the fixing member 4 is fixed to the cold plate 2. The heat pipe 3 comes into reliable contact with the cold plate 2 by the fixing member 4, and thus, heat can be efficiently transferred from the heat pipe 3 to the cold plate 2.

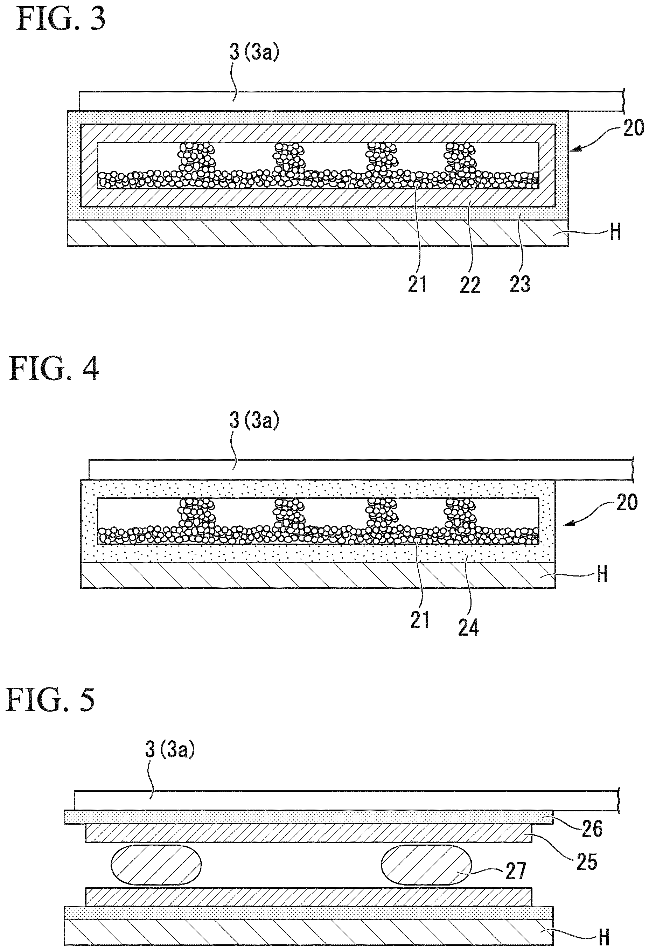

As shown in FIG. 3, the vapor chamber 20 of the invention includes a wick 21, a container 22, and an insulator 23. The wick 21 and the working fluid are enclosed in the container 22. Preferably, the working fluid enclosed in the container 22 is a nonconductive liquid so as to prevent leakage of electricity or the like. As the nonconductive liquid, the above-described hydrofluoroether or the like can be used. The container 22 and the insulator 23 can also be combined in one container made from non-conductive (or insulating) material. The vapor chamber 20 is in contact with both the high voltage terminal H and the heat pipe 3 (the first end portion 3a). In the vapor chamber 20, a portion positioned in the vicinity of the high voltage terminal H functions as an evaporating portion of the working fluid, and a portion positioned in the vicinity of the heat pipe 3 (the first end portion 3a) functions as a condensing portion of the working fluid.

Examples of the material of the wick 21 include a bundled metal filament fiber, a metal mesh, a porous sintered body of metal powder, or the like. The wick 21 can also be made from insulating material like ceramic. The working fluid in a liquid phase in the container 22 can move through the wick 21 due to a capillary phenomenon. The wick 21 is fixed to an inner surface of the container 22 by sintering. In the evaporating portion of the vapor chamber 20, the working fluid receives heat from the high voltage terminal H and is evaporated. The evaporated working fluid flows to the condensing portion of the vapor chamber 20 and is cooled and thereby condensed by the heat pipe 3. The condensed working fluid returns to the evaporating portion through the wick 21 due to the capillary phenomenon. In this way, the vapor chamber 20 can continuously transport heat from the high voltage terminal H to the heat pipe 3.

For the container 22, a copper pipe or container or the like can be used. For example, the wick 21 may be fixed to the inner surface of the container 22 by compressing and deforming the container 22.

The insulator 23 is positioned between the container 22 and the heat pipe 3 (the first end portion 3a) and between the container 22 and the high voltage terminal H. In the present embodiment, the insulator 23 is coated on an outer surface of the container 22, and the insulator 23 is in contact with the heat pipe 3 and the high voltage terminal H. Accordingly, the heat pipe 3 and the high voltage terminal H are electrically isolated from each other, and it is possible to prevent leakage of a current flowing in the high voltage terminal H. As the material of the insulator 23, ceramic or the like can be used. Ceramic is suitable as the material of the insulator 23 positioned in the vicinity of the high voltage terminal H because the ceramic has excellent insulating properties at a high temperature and has a small thermal expansion coefficient. In addition, the insulator 23 may be positioned between resin plates or the like to protect the insulator 23 from an impact load.

As described above, the cooling structure 10 of the present invention includes the vapor chamber 20 which is in contact with the high voltage terminal H, the cold plate 2 which includes the inlet 2a and the outlet 2b for the coolant, and the at least one heat pipe 3 which is in contact with the vapor chamber 20 and the cold plate 2. According to this configuration, the heat of the high voltage terminal H is efficiently transported to the cold plate 2, and thus, it is possible to effectively cool the high voltage terminal H.

In addition, the vapor chamber 20 includes the insulator 23 that electrically insulates the high voltage terminal H and the heat pipe 3 from each other. In this configuration, the high voltage terminal H and the heat pipe 3 are electrically insulated from each other, and it is possible to prevent leakage of a current flowing in the high voltage terminal H via the heat pipe 3.

In addition, the insulator 23 is positioned between the container 22 and the heat pipe 3 and between the container 22 and the high voltage terminal H. In this manner, when the container 22 is formed of a material having conductivity such as a metal, it is possible to prevent the leakage of the current flowing in the high voltage terminal H via the container 22 or the heat pipe 3.

In addition, a nonconductive liquid is used as the working fluid for the vapor chamber 20 and the heat pipe 3. In this manner, even if the working fluid leaks from the vapor chamber 20 or the heat pipe 3, and the working fluid is in contact with the high voltage terminal H, it is possible to prevent the leakage of the current flowing in the high voltage terminal H.

In addition, a technical scope of the present invention is not limited to the above-described embodiment, and various modifications can be applied to the present invention within a scope which does not depart from the scope of the present invention.

For example, in the above-described embodiment, the heat pipe 3 is mechanically fixed to the cold plate 2 by the fixing member 4. However, the fixing method is not limited to this. For example, the heat pipe 3 may be fixed to the cold plate 2 by soldering, brazing, welding, or the like.

In addition, the configuration of the vapor chamber 20 is not limited to the example shown in FIG. 3 and may be appropriately modified. For example, as shown in FIG. 4, the working fluid and the wick 21 may be enclosed inside an insulating container 24 which is formed of an insulating material like ceramic. Similarly to the insulator 23, in FIG. 3, the material of the insulating container 24 can be ceramic or the like.

Alternatively, as shown in FIG. 5, the configuration of the heat transfer mechanism may be modified by using heat pipes 27 instead of the vapor chamber 20. The heat transfer mechanism shown in FIG. 5 includes two heat pipes (second heat pipes) 27, two metal plates 25 and two insulator 26. The two heat pipes 27 are positioned between two metal plates 25. Moreover, the two metal plates 25 are positioned between two insulator plates 26. The metal plates 25 and the heat pipe 3 are insulated by the insulator plates 26. As the heat pipe 27, the similar configuration to the heat pipe 3 can be used. As the working fluid of the heat pipe 27, it is preferable, but not limited, to use the nonconductive liquid.

In the configuration shown in FIG. 5, the heat is transferred from the high voltage terminal H to the heat pipe 3 by the heat pipe 27. Moreover, the high voltage terminal H and the heat pipe 3 are insulated by the insulator plates 26. According to this configuration, it is possible to prevent the leakage of current from the high voltage terminal H to the heat pipe 3.

In addition, the configuration of the cold plate 2 may be appropriately modified. For example, the cold plate may include a base plate and a cover. A plurality of fins may be arranged in parallel in the inner space of the cover and directly on base plate. In this case, when the inlet and the outlet for the coolant connect to the inner space between the cover, the inner space (especially the space between the fins) functions as a path for the coolant flow.

### (second embodiment)

Next, a second embodiment according to the present invention will be described, for which the basic configuration is similar to that of the first embodiment. Accordingly, the same reference numerals are assigned to the similar configurations, descriptions thereof are omitted, and only points of difference will be described.

A cooling structure 10 of this embodiment uses a heat sink 5 as the heat dissipation mechanism.

The heat sink (heat dissipation mechanism) 5 includes a plurality of fins 5a arranged in parallel, and is configured to dissipate heat from the fins 5a. The heat sink 5 is in contact with the second end portion 3b of the heat pipe 3. In this case, same as the first embodiment, the second end portion 3b functions as the condensing portion for the working fluid. Heat is transferred from the high voltage terminal H to the heat sink 5 via the heat pipe 3, and it is possible to efficiently cool the high voltage terminal H. In addition, comparing with the case using the cold plate 2, this configuration does not need a pump or the like which circulates the liquid coolant. Therefore, it is possible to simplify the cooling structure 10. However, the second embodiment might use a cooling fan to circulate air flow through fins 5a (depending on terminal heat output).

While preferred embodiments of the invention have been described and shown above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

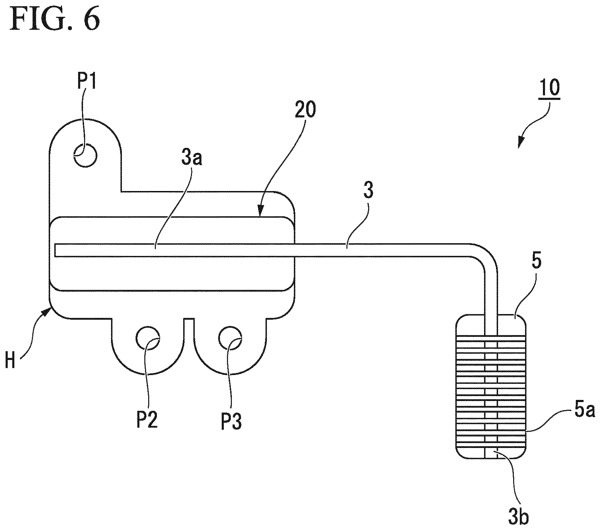

For example, the cooling structure shown in FIG. 6 of the second embodiment may include one of the configurations shown in FIGS. 3 to 5.

### DESCRIPTION OF THE REFFERENCE SYMBOLS

2...cold plate (heat dissipation mechanism), 2a...inlet, 2b...outlet, 3...heat pipe (first heat pipe), 3a...first end portion, 3b...second end portion, 5...heat sink (heat dissipation mechanism), 5a...fin, 10...high voltage terminal cooling structure (cooling structure), 20...vapor chamber (heat transfer mechanism), 22...container, 23...insulator, 24...insulating container, 27...heat pipe (second heat pipe, heat transfer mechanism), H...high voltage terminal

## Claims

1. A high voltage terminal cooling structure (10), comprising:
a high voltage terminal (H);
at least one first heat pipe (3) which includes a first end portion (3a) and a second end portion (3b);
a heat transfer mechanism (20) which is in contact with both the high voltage terminal (H) and the first end portion (3a); and
a heat dissipation mechanism (2, 5)
the heat dissipation mechanism (2, 5) which is in contact with the second end portion (3b) is one selected from:
a cold plate (2) which includes an inlet (2a) and an outlet (2b) for a coolant; or
a heat sink (5) which includes a plurality of fins (5a) arranged in parallel, **characterized in that**,
the heat transfer mechanism (20) is a vapor chamber (20) which is in contact with the first end portion (3a),
the vapor chamber (20) includes a container (22) having conductivity and into which a working fluid and a wick are enclosed,
the vapor chamber also includes an insulator (23, 26) that electrically insulates the high voltage terminal (H) and the first heat pipe (3) from each other, and
the insulator (23, 26) is positioned between the container (22) and the first heat pipe (3) and between the container (3) and the high voltage terminal (H).

2. The high voltage terminal cooling structure according to claim 1,
wherein a working fluid of the first heat pipe (3) is a nonconductive liquid.

3. The high voltage terminal cooling structure according to claim 1 or 2,
wherein the vapor chamber uses a nonconductive liquid as the working fluid.

## Patentansprüche

1. Hochspannungsklemmenkühlstruktur (10) mit:
- einer Hochspannungsklemme (H);
- mindestens einem ersten Wärmerohr (3), welches einen ersten Endabschnitt (3a) und einen zweiten Endabschnitt (3b) aufweist;
- einer Wärmeübertragungseinrichtung (20), welche in Kontakt sowohl mit der Hochspannungsklemme (H) und dem ersten Endabschnitt (3a) steht; und
- einer Wärmeabführeinrichtung (2, 5),
wobei die Wärmeabführeinrichtung (2,5), welche in Kontakt mit dem zweiten Endabschnitt (3b) steht, ausgewählt ist aus:
- einer Kühlplatte (2), welche einen Einlass (2a) und einen Auslass (2b) für ein Kühlmedium aufweist, oder
- einen Kühlkörper (5), welcher eine Vielzahl von parallel angeordneten Rippen (5a) aufweist, **dadurch gekennzeichnet,**
**dass** die Wärmeübertragungseinrichtung (20) eine Verdampferkammer (20) ist, welche in Kontakt mit dem ersten Endabschnitt (3a) steht,
**dass** die Verdampferkammer (20) einen Behälter (22) aufweist, welcher eine Leitfähigkeit besitzt und in welchem ein Arbeitsfluid und ein Docht eingeschlossen sind,
**dass** die Verdampferkammer weiter eine Isolierung (23, 26) aufweist, welche die Hochspannungsklemme (H) und das erste Wärmerohr (3) voneinander elektrisch isoliert, und
**dass** die Isolierung (23, 26) zwischen dem Behälter (22) und dem ersten Wärmerohr (3) und zwischen dem Behälter (3) und der Hochspannungsklemme (H) angeordnet ist.

2. Hochspannungsklemmenkühlstruktur nach Anspruch 1,
wobei das Arbeitsfluid des ersten Wärmerohrs (3) eine nicht leitfähige Flüssigkeit ist.

3. Hochspannungsklemmenkühlstruktur nach Anspruch 1 oder 2,
wobei die Verdampferkammer eine nicht leitfähige Flüssigkeit als Arbeitsfluid verwendet.

## Revendications

1. Structure de refroidissement de borne haute tension (10), comprenant :
une borne haute tension (H) ;
au moins un premier caloduc (3) qui comporte une première portion d'extrémité (3a) et une seconde portion d'extrémité (3b) ;
un mécanisme de transfert de chaleur (20) qui est en contact avec à la fois la borne haute tension (H) et la première portion d'extrémité (3a) ; et
un mécanisme de dissipation de chaleur (2, 5)
le mécanisme de dissipation de chaleur (2, 5) qui est en contact avec la seconde portion d'extrémité (3b) est un élément sélectionné parmi :
une plaque froide (2) qui comporte une entrée (2a) et une sortie (2b) pour un fluide frigorigène ; ou
un puits de chaleur (5) qui comporte une pluralité d'ailettes (5a) agencées en parallèle,
**caractérisée en ce que**,
le mécanisme de transfert de chaleur (20) est une chambre de vapeur (20) qui est en contact avec la première portion d'extrémité (3a),
la chambre de vapeur (20) comporte un contenant (22) ayant une conductivité et dans lequel un fluide de travail et une mèche sont enfermés,
la chambre de vapeur comporte également un isolateur (23, 26) qui isole électriquement la borne haute tension (H) et le premier caloduc (3) l'un de l'autre ; et
l'isolateur (23, 26) est positionné entre le contenant (22) et le premier caloduc (3) et entre le contenant (3) et la borne haute tension (H).

2. Structure de refroidissement de borne haute tension selon la revendication 1,
dans laquelle un fluide de travail du premier caloduc (3) est un liquide non conducteur.

3. Structure de refroidissement de borne haute tension selon la revendication 1 ou 2,
dans laquelle la chambre de vapeur utilise un liquide non conducteur en tant que fluide de travail.
